# EUROPÄISCHE PATENTANMELDUNG

(11) **EP 2 547 071 A2**
(43) Veröffentlichungstag der Anmeldung: **16.01.2013**
(21) Anmeldenummer: 12401109.9
(22) Anmeldetag: 01.06.2012
(51) Int. Cl.: H04L 29/08

(54) **HMI eines landwirtschaftlichen Gerätes**

(30) Priorität: 07.06.2011 DE 102011050880
(71) Anmelder: Amazonen-Werke H. Dreyer GmbH & Co. KG, 49205 Hasbergen (DE)
(72) Erfinder: Nagel, Michael, 27804 Berne (DE)

(57) **Zusammenfassung**

HMI-Gerät eines landwirtschaftlichen Gerätes, ausgestattet mit einem zur Verarbeitung von mittels eines Kommunikationssystems übermittelter Befehle und/oder Daten eine Befehlseinheit aufweisenden Web-Server, wobei die Befehle und/oder Daten mittels eines mit einem Web-Browser ausgestatteten Bedienelementes in das Kommunikationssystem einspeisbar sind. Um insbesondere unter dem Sicherheitsaspekt für die Steuerung landwirtschaftlicher Geräte sicher funktionierende Steuersysteme zu schaffen, ist vorgesehen, dass mittels geeigneter Mittel bereitgestellter Sicherheitsmaßnahmen eine deterministische Antwortzeit in der Datenkommunikation sicherstellbar ist.

## Beschreibung

Die Erfindung betrifft ein HMI-Gerät eines landwirtschaftlichen Gerätes gemäß des Oberbegriffes des Patentanspruches 1. Ein HMI-Gerät (engl. Human Machine Interface - dt. Mensch-Maschine-Schnittstelle) dient zur Interaktion zwischen Mensch und Maschine.

Aus der DE 203 14 067 U1 ist ein HMI-Gerät mit einem Web-Server offenbart. Darin weist der Web-Server zum Empfang von Befehlen über ein Kommunikationsnetz eine Befehlseinheit auf, die auch zur Interpretation oder Ausführung der Befehle verwendbar ist. Die Befehle werden dabei von mindestens einem Netzteilnehmer gesendet.

Zu den Nachteilen eines derart ausgestalteten HMI-Gerätes gehören mögliche Kollisionen bei Verwendung mehrerer Web-Server, sowie ein geringer Datendurchsatz. Außerdem sind zeitkritische Anwendungen nicht durchführbar, insbesondere, da der Zeitpunkt einer Datensendung nicht vorhersehbar ist. Hierdurch ergibt sich beispielsweise beim Einsatz von Maschinensteuerungen das Problem, dass nicht korrekt übermittelte Signale, beispielsweise zum Unterbrechen eines Vorganges, verloren gehen und der Vorgang dementsprechend in unerwünschter Weise fortgesetzt wird.

Der Erfindung liegt die Aufgabe zugrunde, insbesondere unter dem Sicherheitsaspekt für die Steuerung landwirtschaftlicher Geräte sicher funktionierende Steuersysteme zu schaffen.

Diese Aufgabe wird erfindungsgemäß durch das Kennzeichen des Patentanspruches 1 gelöst. Durch die Bereitstellung von Sicherheitsmaßnahmen zur Sicherstellung einer deterministischen Antwortzeit mittels geeigneter Mittel werden die Nachteile des Standes der Technik beseitigt. Mit Hilfe deterministischer Antwortzeiten, d. h vorhersagbarer Antwortzeiten, können minimale Antwortzeiten garantiert werden. Dadurch sind zeitkritische Anwendungen jeder Art in geeigneter kontrollierbarer Weise umsetzbar. Zeitkritisch und/oder deterministisch bedeutet dabei nicht zwangsläufig, dass schnelle Antwortzeiten benötigt und/oder erwünscht sind, sondern nur, dass minimale Antwortzeiten vorhersag- und/oder garantierbar sind. Somit ist sicherstellbar, dass Antworten zu festgelegten Zeitpunkten verfügbar sind und bei Nichtvorliegen einer erforderlichen Antwort beispielsweise ein Gerät und/oder Geräteteil in einen sicheren Zustand überführbar ist, beispielsweise durch Zwangsabschaltung.

In der Landwirtschaft gehören zu zeitkritischen Anwendungen insbesondere solche, bei denen die Regelung von Betriebsparametern einer landwirtschaftlichen Maschine aufgrund von rasch aufeinander folgend gewonnenen und/oder ausgewerteten Daten durchführbar ist, beispielsweise dem Beginn und/oder der Unterbrechung des Ausbringens von flüssigen und/oder in Flüssigkeiten gelösten Mitteln mittels einer landwirtschaftlichen Feldspritze zum Ausbringen von flüssigen und/oder in Flüssigkeiten gelösten Mitteln, wobei der Beginn und/oder die Unterbrechung des Ausbringens von flüssigen und/oder in Flüssigkeiten gelösten Mitteln steuerbar ist, insbesondere basierend auf den Daten einer in einem Speicherelement eines Bordcomputers hinterlegten digitalisierten Karte in Verbindung mit Daten zur Positionsbestimmung der landwirtschaftlichen Feldspritze, beispielsweise per Satellitennavigationssystem, wobei die Daten zur Positionsbestimmung in möglichst rascher Abfolge zu gewinnen sind, beispielsweise bei der Verwendung einer hohen Fahrgeschwindigkeit der landwirtschaftlichen Feldspritze, um eine präzise Kontrolle des Beginns und/oder der Unterbrechung des Ausbringvorganges am Feldrand zu gewährleisten.

Dieses ist bei landwirtschaftlichen Geräten von besonderer Bedeutung, weil vor allem unter sicherheitstechnischen Aspekten ein genau festgelegtes Ansteuern von Bauteilen und/oder Stellelementen von landwirtschaftlichen Geräten erfolgen muss, damit das Gerät zu jedem Zeitpunkt beherrsch-, steuer- und/oder regelbar sein muss. Es dürfen keine unvorhersehbaren, ungeplanten Vorgänge und/oder Situationen entstehen, in denen die Kontrollierbarkeit gefährdet sein kann.

In einer vorteilhaften Ausgestaltung der Erfindung sind die geeigneten Mittel und/oder bereitgestellten Sicherheitsmaßnahmen derart ausgestaltbar, dass im Web-Browser, sowie jedem und/oder den betreffenden Web-Servern eine Überwachungsinstanz integrierbar ist, die zyklisch überprüft, ob jeder Teilnehmer im Kommunikationssystem den aktuellen Nachrichtenstatus besitzt. Dazu ist durch jeden Teilnehmer im Kommunikationssystem der aktuelle Status seiner Nachrichtenhistorie an alle Teilnehmer versendbar, und jede Nachrichtensendung im gesamten Kommunikationssystem ist derart ausführbar, dass sie allen Teilnehmern am Kommunikationssystem zur Verfügung steht. Die Überwachungsinstanz jedes einzelnen Teilnehmers liefert ein Prüfergebnis, ob der Teilnehmer die aktuelle Nachrichtenhistorie besitzt oder nicht. Besitzt der Teilnehmer die aktuelle Nachrichtenhistorie, läuft sein Betrieb dementsprechend weiter. Besitzt der Teilnehmer nicht die aktuelle Nachrichtenhistorie, so ist die aktive Sendetätigkeit dieses Teilnehmers beendbar und seine Applikation in einen sicheren Zustand überführbar.

Für ein landwirtschaftliches Gerät, beispielsweise eine, wie oben erwähnte, landwirtschaftliche Feldspritze ist eine derartige Ausgestaltung der Erfindung vorteilhaft, da eine Nachricht zur Unterbrechung des Ausbringens von flüssigem und/oder in Flüssigkeit gelöstem Mittel, die mittels des Positionsbestimmungssystems und/oder einer Eingabe der Bedienperson am Web-Browser erzeugbar ist und die den zur Unterbrechung des Ausbringens verwendbaren Teilnehmer am Kommunikationssystem möglicherweise nicht erreicht, sondern nur einen und/oder mehrere andere Teilnehmer des Kommunikationssystems. In diesem Fall registriert der Teilnehmer zur Unterbrechung des Ausbringens nach mehr als einem Zyklus, dass seine Nachrichtenhistorie nicht aktuell ist. Daraufhin überführt der Teilnehmer zur Unterbrechung des Ausbringens seine Applikation in einen sicheren Zustand, d.h. das Ausbringen wird unterbrochen. Dadurch wird nicht unnötig Mittel ausgebracht, wodurch Umweltschädigungen und die Entstehung vermeidbarer Kosten vermeidbar sind.

In einer vorteilhaften und sehr einfachen Ausgestaltung der Erfindung sind die auf dem Bedienterminal zur Anzeige bringbaren Bedienoberflächen durch den Web-Server über das Kommunikationssystem übermittelbar. Auf diese Weise sind die Bedienoberflächen des den Web-Server beinhaltenden HMI-Gerätes eines landwirtschaftlichen Gerätes mit beliebigen Bediengeräten verwendbar, solange diese nur einen Web-Browser bereitstellen.

In einer vorteilhaften Ausgestaltung der Erfindung sind Interaktionen der Bedienperson mit dem landwirtschaftlichen Gerät durchführbar, indem an dem Web-Browser vorgenommene Eingaben über das Kommunikationssystem an den Web-Server übermittelbar sind.

Weiterhin sind die an dem Web-Browser vorgenommenen, mittels des Kommunikationssystems an den Web-Server des HMI-Gerätes übertragenen Eingaben in einer vorteilhaften und einfach erstellbaren Ausgestaltung der Erfindung zur Steuerung und/oder Regulierung und/oder Einstellung des landwirtschaftlichen Gerätes verwendbar.

In einer vorteilhaften Ausführung der Erfindung sind analog Informationen über Betriebsparameter des landwirtschaftlichen Gerätes von dem Web-Server des HMI-Gerätes mittels des Kommunikationssystems an den Web-Browser übermittelbar.

Auf die oben genannte Weise kann das den Web-Server beinhaltende HMI-Gerät eines landwirtschaftlichen Gerätes in einfacher Weise von einem Bedienterminal, beispielsweise einer landwirtschaftlichen Zugmaschine und/oder eines Führerhauses eins landwirtschaftlichen Gerätes, gesteuert und/oder überwacht werden.

In einer vorteilhaften Ausgestaltung der Erfindung sind zusätzlich zum ersten HMI-Gerät weitere HMI-Geräte mit Web-Server desselben und/oder anderer landwirtschaftlicher Geräte verwendbar, um mittels des Kommunikationssystems Informationen mit dem Web-Browser auszutauschen. Beispielsweise sind dadurch mehrere unabhängige landwirtschaftliche Geräte gleichzeitig steuer- und/oder kontrollierbar.

In einer vorteilhaften Ausgestaltung der Erfindung umfassen die zusätzlich und/oder allein verwendbaren HMI-Geräte mit Web-Server beliebige weitere Anbauvorrichtungen, beispielsweise Sensoren, Positionserfassungsgeräte und/oder etc. Beispielsweise kann ein externes Positionserfassungsgerät, beispielsweise ein GPS-Gerät, anschließbar sein, um für die Steuerung und/oder Überwachung eines verwendeten landwirtschaftlichen Gerätes verwendbar zu sein.

In einer vorteilhaften Ausgestaltung der Erfindung sind auch Web-Server verwendbar, die keinem Gerät und/oder keiner Vorrichtung zuordbar sind, sondern als Softwareapplikationen ausgestaltet sind, welche auf einem an das Kommunikationssystem anschließbaren Steuergerät ausführbar sind. Dadurch wird eine sehr flexible Handhab- und/oder Einsetzbarkeit erfindungsgemäßer Geräte erreicht.

In einer vorteilhaften Ausgestaltung der Erfindung sind sowohl drahtgebundene als auch drahtlose Umsetzungen der Kommunikation realisierbar. Beispielsweise kann durch die Verwendung von Bluetooth und/oder Infrarot und/oder Ultraschall die Verwendung von verschmutz- und/oder beschädigbaren Verkabelungen eingeschränkt werden.

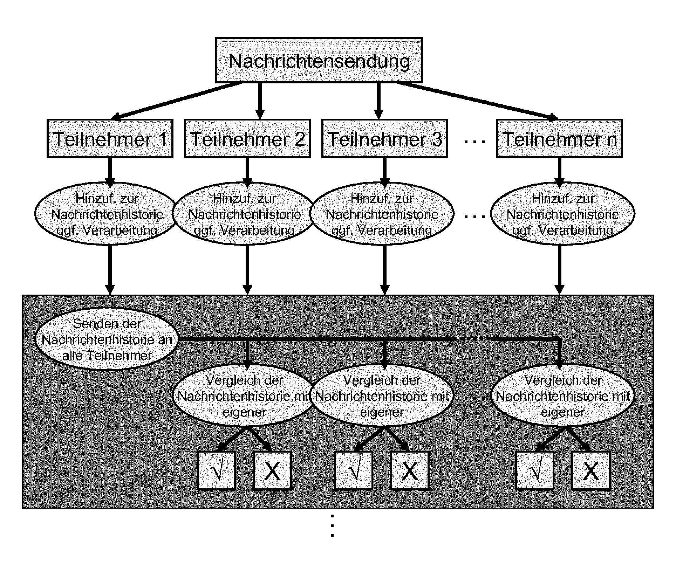

Weitere Einzelheiten der Erfindung sind der Beispielsbeschreibung und der Zeichnung zu entnehmen. Die Zeichnung zeigt eine Ablaufskizze zur Verwendung durch geeignete Mittel bereitgestellter Sicherheitsmaßnahmen in einem Kommunikationssystem.

Die Zeichnung zeigt eine Ablaufskizze zur Verwendung durch geeignete Mittel bereitgestellter Sicherheitsmaßnahmen in einem Kommunikationssystem. Es erfolgt zunächst eine Nachrichtensendung durch einen beliebigen Teilnehmer 1 bis n im Kommunikationssystem. Diese Nachricht wird von allen Teilnehmern 1 bis n des Kommunikationssystems empfangen.

Die Nachricht wird durch jeden Teilnehmer 1 bis n im Kommunikationssystem zu dessen eigener Nachrichtenhistorie hinzugefügt. Enthält die Nachricht für den Teilnehmer relevante Informationen, so wird die Nachricht verwendet, beispielsweise zur Betriebssteuerung der ihm zugeordneten Applikation.

Im Anschluss daran beginnt ein erster Teilnehmer seine Nachrichtenhistorie über das Kommunikationssystem an alle Teilnehmer 1 bis n zu übertragen. Die Teilnehmer 1 bis n vergleichen die eingehende Nachrichtenhistorie mit ihrer eigenen, wie in der Ablaufskizze dargestellt.

Sind die Nachrichtenhistorien beider Teilnehmer übereinstimmend, so wird die Arbeit der betreffenden Teilnehmer in vorgesehener Weise fortgeführt.

Treten bei mehreren, insbesondere zwei, eingegangenen Nachrichtenhistorien, die durch denselben Teilnehmer gesendet wurden, bei demselben empfangenden Teilnehmer Unterschiede zu der zu diesem Teilnehmer gehörenden Nachrichtenhistorie auf, so geht der Teilnehmer in einen sicheren Zustand über.

Dieser sichere Zustand kann umfassen: Die Unterbrechung von Sendetätigkeiten und/oder das Unterbrechen einer Tätigkeit der zugehörigen Applikation und/oder das Aufnehmen einer Tätigkeit der zugehörigen Applikation.

Die Kontrolle der Nachrichtenhistorien unter den verschiedenen Teilnehmern 1 bis n stellt hier sicher, dass eine deterministische, d.h. vorhersagbare, minimale, Antwortzeit erreichbar ist.

Ein Beispiel, bei dem das Unterbrechen einer Tätigkeit der zugehörigen Applikation einen sicheren Zustand darstellt, ist beispielsweise das Ausbringen von Spritzmittel mittels einer landwirtschaftlichen Feldspritze, wobei mittels durch die Bedienperson vorgenommene Eingaben über den Web-Browser und/oder durch die Daten eines Positionsbestimmungssystems eine Unterbrechung des Ausbringvorgangs vorgesehen ist. Erreicht beispielsweise eine derartige Nachricht zur Unterbrechung des Ausbringvorgangs nicht den Teilnehmer am Kommunikationssystem, der dieser Applikation zugeordnet ist, so veranlasst der Teilnehmer, der dieser Applikation zugeordnet ist dennoch die Unterbrechung des Ausbringvorganges, und zwar dann, sobald mehr als ein Prüfzyklus basierend auf den Nachrichtenhistorien der anderen Netzteilnehmer mit negativem Prüfergebnis erfolgt ist.

Auf diese Weise stellt die Erfindung eine sichere und einfach umsetzbare Sicherheitsmaßnahme für den Betrieb, insbesondere landwirtschaftlicher, Geräte dar.

Jeder in dem Kommunikationssystem verwendete Web-Server ist verwendbar, um über das Kommunikationssystem auf einem Bedienterminal, insbesondere eines landwirtschaftlichen Gerätes, zur Anzeige bringbare Bedienoberflächen über das Kommunikationssystem zu übermitteln.

Diese auf dem Bedienterminal zur Anzeige gebrachten Bedienoberflächen sind von einer Bedienperson verwendbar, um mittels eines Web-Browsers Eingaben an den Web-Server zu übermitteln.

Mit Hilfe der übermittelten Eingaben sind Steuerungen und/oder Regulierungen und/oder Einstellungen des landwirtschaftlichen Gerätes durchführbar.

Insbesondere zur Kontrolle der durchgeführten Steuerungen und/oder Regulierungen und/oder Einstellungen und/oder zur Kontrolle von Betriebsparametern des landwirtschaftlichen Gerätes lassen sich vom Web-Server Informationen mittels des Kommunikationssystems an den Web-Browser übermitteln. Diese können dann durch die Bedienperson in beliebiger Weise verwendet werden, beispielsweise zur Auswertung und/oder Beurteilung der derzeit durchgeführten Arbeit des landwirtschaftlichen Gerätes.

Wie bereits anhand von der Darstellung in der Ablaufskizze beschrieben, sind beliebig viele Teilnehmer 1 bis n am Kommunikationssystem, d.h. HMI-Geräte, verwendbar. Gleichzeitig können aber auch andere Geräte verwendbar sein, beispielsweise Sensoren, Positionserfassungsgeräte und/oder etc.. In analoger Weise sind Softwareapplikationen kontrollier- und/oder steuer- und/oder- regelbar, welche auf an das Kommunikationssystem anschließbaren Steuergeräten ausführbar sind. Dadurch sind die Flexibilität, Produktivität, Kontrollierbarkeit, Ökonomie und/oder etc. des landwirtschaftlichen Gerätes in geeigneter Weise erhöhbar bzw. verbesserbar.

Dadurch, dass das verwendete Kommunikationssystem sowohl drahtgebunden als auch drahtlos, beispielsweise Bluetooth, Infrarot und/oder Ultraschall, auslegbar ist, bietet sich eine weiterhin vergrößerte Flexibilität in der Anwendbarkeit. Beispielsweise sind beschädigungs- und/oder verschmutzungsanfällige drahtgebundene Verbindungen vermeidbar.

## Patentansprüche

1. HMI-Gerät eines landwirtschaftlichen Gerätes, ausgestattet mit einem zur Verarbeitung von mittels eines Kommunikationssystems übermittelter Befehle und/oder Daten eine Befehlseinheit aufweisenden Web-Server, wobei die Befehle und/oder Daten mittels eines mit einem Web-Browser ausgestatteten Bedienelementes in das Kommunikationssystem einspeisbar sind, **dadurch gekennzeichnet, dass** mittels geeigneter Mittel bereitgestellter Sicherheitsmaßnahmen eine deterministische Antwortzeit in der Datenkommunikation sicherstellbar ist.

2. HMI-Gerät eines landwirtschaftlichen Gerätes nach Anspruch 1, **dadurch gekennzeichnet, dass** die geeigneten Mittel und/oder bereitgestellten Sicherheitsmaßnahmen derart ausgestaltbar sind, dass im Web-Browser, sowie jedem und/oder den betreffenden Web-Servern eine Überwachungsinstanz integrierbar ist, die zyklisch überprüft, ob jeder Teilnehmer im Kommunikationssystem den aktuellen Nachrichtenstatus besitzt, indem durch jeden Teilnehmer im Kommunikationssystem der aktuelle Status seiner Nachrichtenhistorie an alle Teilnehmer versendbar ist, und wobei jede Nachrichtensendung im gesamten Kommunikationssystem derart ausführbar ist, dass sie allen Teilnehmern am Kommunikationssystem zur Verfügung steht, und wobei ein Prüfergebnis, demzufolge ein Teilnehmer nicht die aktuelle Nachrichtenhistorie besitzt, dazu verwendbar ist die aktive Sendetätigkeit dieses Teilnehmers zu beenden und seine Applikation in einen sicheren Zustand zu überführen.

3. HMI-Gerät eines landwirtschaftlichen Gerätes nach zumindest einem der vorangehenden Ansprüche, **dadurch gekennzeichnet, dass** die auf dem Bedienterminal zur Anzeige bringbaren Bedienoberflächen durch den Web-Server über das Kommunikationssystem übermittelbar sind.

4. HMI-Gerät eines landwirtschaftlichen Gerätes nach zumindest einem der vorangehenden Ansprüche, **dadurch gekennzeichnet, dass** Interaktionen der Bedienperson mit dem landwirtschaftlichen Gerät dadurch durchführbar sind, dass an dem Web-Browser vorgenommene Eingaben an den Web-Server des landwirtschaftlichen Gerätes über das Kommunikationssystem übermittelbar sind.

5. HMI-Gerät eines landwirtschaftlichen Gerätes nach zumindest einem der vorangehenden Ansprüche, **dadurch gekennzeichnet, dass** an dem Web-Browser vorgenommene und mittels des Kommunikationssystems an den Web-Server des landwirtschaftlichen Gerätes übermittelte Eingaben zur Steuerung und/oder Regulierung und/oder Einstellung des landwirtschaftlichen Gerätes verwendbar sind.

6. HMI-Gerät eines landwirtschaftlichen Gerätes nach zumindest einem der vorangehenden Ansprüche, **dadurch gekennzeichnet, dass** von dem Web-Server Informationen über Betriebsparameter des landwirtschaftlichen Gerätes mittels des Kommunikationssystems an den Web-Browser übermittelbar sind.

7. HMI-Gerät eines landwirtschaftlichen Gerätes nach zumindest einem der vorangehenden Ansprüche, **dadurch gekennzeichnet, dass** zusätzlich zu einem ersten HMI-Gerät eines landwirtschaftlichen Gerätes auch ein oder mehrere weitere HMI-Geräte mit Web-Server des selben oder anderer landwirtschaftlicher Geräte verwendbar sind, um mittels des Kommunikationssystems Informationen mit dem Web-Browser auszutauschen.

8. Vorrichtung nach zumindest einem der vorangehenden Ansprüche, **dadurch gekennzeichnet, dass** beliebige weitere Anbauvorrichtungen, beispielsweise Sensoren, Positionserfassungsgeräte und/oder etc., verwendbar sind, um über das Kommunikationssystem dem Web-Browser und/oder den Web-Servern zu kommunizieren.

9. Vorrichtung nach zumindest einem der vorangehenden Ansprüche, **dadurch gekennzeichnet, dass** weitere Web-Server verwendbar sind, die keinem Gerät und/oder keiner Vorrichtung zuordbar sind, sondern vielmehr als Softwareapplikationen ausgestaltet sind, welche auf einem an das Kommunikationssystem anschließbaren Steuergerät ausführbar sind.

10. HMI-Gerät eines landwirtschaftlichen Gerätes und/oder Vorrichtung nach zumindest einem der vorangehenden Ansprüche, **dadurch gekennzeichnet, dass** das Kommunikationssystem sowohl drahtgebunden als auch drahtlos, beispielsweise mittels Bluetooth, Infrarot und/oder Ultraschall, ausgestaltbar ist.
